# FASCICULE DE BREVET EUROPEEN

(11) **EP 0 986 870 B1**
(45) Date de publication et mention de la délivrance du brevet: **01.08.2001**
(21) Numéro de dépôt: 98928416.1
(22) Date de dépôt: 02.06.1998
(51) Int. Cl.: H04K 3/00

(54) **APPAREILS POUR FILTRER LES RADIOTELEPHONES**
VORRICHTUNG ZUR FILTERUNG VON FUNKFERNSPRECHGERÄTEN
RADIOTELEPHONE FILTERING APPARATUS

(30) Priorité: 02.06.1997 FR 9707000; 01.08.1997 FR 9710105
(43) Date de publication de la demande: 22.03.2000
(73) Titulaire: Girod, Raoul, 69530 Brignais (FR)
(72) Inventeur: Girod, Raoul, 69530 Brignais (FR)
(74) Mandataire: Bratel, Gérard
(86) Numéro de dépôt international: FR9801109
(87) Numéro de publication internationale: WO9856130

(56) Documents cités:
- EP-A- 0 546 849
- EP-A- 0 568 824
- DE-A- 2 240 213
- WEISS K ET AL: "CONVENTIONAL LOCAL AREA RADIO COVERAGE SYSTEM" MOTOROLA TECHNICAL DEVELOPMENTS, vol. 13, 1 juillet 1991, pages 67-69, XP000259225 cité dans la demande

## Description

La présente invention concerne un appareil pour neutraliser les radiotéléphones dans des espaces où leur utilisation est interdite ou gênante.

Actuellement, le nombre de radiotéléphones devient très important.Leur sonnerie automatique ou les appels sont de nature à géner les autres personnes présentes dans le même espace ou à perturber le fonctionnement d'appareils acoustiques ou électroniques.
A titre d'exemples, les locaux à protéger peuvent être: avions,salles de spectacles,cinémas,théatres,tribunaux, écoles, hopitaux, salles de réunion,salles de conférences, restaurants, églises, etc ...
D'autres espaces peuvent être concernés, qu'ils soient ouverts( cimetières,etc ...) ou fermés(véhicules,trains,...). La protection doit se faire de façon sélective en fonction du choix des responsables de ces espaces et en respectant le système global de radiotéléphonie.
Le document MOTOROLA , Weiss and Muri, vol 13 de juillet 1991 utilise un système avec des relais radio utilisant des fréquences différentes de celles des émetteurs de base.
Le brevet US WEST EP 0568824 nécessite des téléphones mobiles spéciaux et pré-programmés pour identifier les zônes.
Notre invention n'utilise pas un système avec des fréquences différentes et est applicable aux mobiles actuels en service. La présente invention concerne aussi les autres appareils de radiomessagerie qui possèdent une sonnerie, désignés sous le nom général de radiotéléphones ci-dessous.
La présente invention ne concerne pas les émetteurs mobiles qui pourraient être utilisés ponctuellement à des fins de police ou militaires.

La présente invention a pour objet de neutraliser volontairement les radiotéléphones sans l'intervention de leurs utilisateurs, en brouillant ou en modifiant les communications: réceptions et/ou émissions.
Nous appellerons brouilleur l'appareil objet de l'invention, même lorsqu'il se contentera de filtrer.
La présente invention repose sur un appareil de brouillage ayant plusieurs options et niveaux de brouillage et filtrage.Les principes de l'invention sont applicables à tous les systèmes de radiotéléphonie analogiques ou numériques quelles que soient les systèmes ou les normes:
GSM,DCS,DECT,CT2,3RP,PHP,PHS,PDC,AMPS,IS54,CDMA,UDPC,CDMA, DSSR,PCN,PCS,FPLMTS,UMTS,etc avec des émetteurs terrestres ou par satellites.
Selon une première variante,la présente invention brouille la réception des signaux d'appel et de voies balises.
La sonnerie d'un radiotéléphone est déclenchée par la réception par ondes hertziennes du code individuel du radiotéléphone.
La présente variante utilise la superposition à ces codes d'un signal radio non identifiable, sur les mêmes fréquences, ce qui modifie les codes d'appel qui ne sont plus reconnus par les radiotéléphones destinataires.
Le radiotéléphone sera considéré comme non accessible par l'émetteur, ce qui déclenchera l'éventuelle messagerie.
Selon plusieurs variantes, le brouilleur se comporte en émetteur avec superposition sur les signaux radio de façon à les rendre méconnaissables, soit de façon permanente, soit de façon intermittente, ou en filtre en établissant un dialogue codifié avec les stations de base.
Ce brouilleur ne doit pas perturber les communications dans des espaces qui ne sont pas volontairement protégés.
La présente invention a pour but de limiter le volume à brouiller en adaptant la puissance du signal de brouillage en fonction du volume et de la nature des matériaux des cloisons des locaux à protéger, sa couverture angulaire ainsi que la nature des signaux émis.
Pour limiter le brouillage et sa puissance, la présente invention,selon une de ses caractéristiques, comprendra un récepteur qui permettra de mesurer la puissance des réceptions et ainsi, adapter le brouillage en puissance et en nature.Une variante permet de détecter également la réponse des téléphones locaux pour brouiller leur signal à certains moments précis (intermittent).
Dans certains cas, la puissance pourra être inférieure à 5mW.
Selon une autre méthode, le brouilleur détectera et/ou neutralisera les radiotéléphones au moment d'un passage à des endroits géograhiques précis: portes, etc...
Les brouilleurs pourront donc être actifs ou passifs selon qu'ils comportent un récepteur et un émetteur ou seulement un émetteur pour chaque système à brouiller.
Selon leurs configurations, celà permettra de leurs adjoindre des fonctionnalités variées :
- basculement de la sonnerie en vibreur,
- stockage des appels,
- filtrage sélectif des téléphones selon des numéros choisis, des endroits choisis, etc
- véritable central de radiotéléphonie locale, pouvant constituer une véritable station sélective de base adaptée à un volume limité et pour réaliser un filtrage sélectif en fonction des numéros,du type d'appel,... avec certaines analogies avec les centraux actuels.
Pour adapter la protection à de grands volumes ou à des volumes de formes quelconques, la combinaison de plusieurs appareils sera envisagée,de même pour les différentes normes. Le radiotéléphone redevient opérationnel dès qu'il sort de l'espace protégé, sans intervention du propriétaire.
Des messages s'afficheront pour prévenir l'utilisateur des appels pendant sa présence en zônes brouillées (option).
Dans la pratique, une affiche pourra prévenir de la protection du local à son entrée et à sa sortie.
En effet, lorsque le téléphone mobile est utilisé pour des communications importantes ou urgentes, les utilisateurs doivent être prévenus et agir sous leur responsabilité. Plusieurs niveaux de brouillage sont envisagés: blocage des réceptions et/ou blocages des émissions, suivant le choix des responsables des volumes à protéger.

Le matériel objet de la présente invention est ainsi constitué,au moins, d'un boitier contenant un émetteur hautes fréquences ( gammes de 480,900,1800 Mhz ...selon les standards utilisés dans le pays considéré) avec un réglage en puissance et en direction angulaire.
L'émission du signal de brouillage est faite en balayant les gammes de fréquences utilisées par les radiotéléphones. Selon une première caractéristique, le matériel objet de l'invention envoie un signal périodique unique avec des fréquences correspondant aux réceptions des radiotéléphones. Pour le système GSM900, par exemple, le signal de brouillage sera constitué de signaux émis sur les fréquences des voies balises de l'endroit.
Pour tous les autres systèmes de radiotéléphonie présents dans le même local, différentes fréquences seront utilisées. Il peut être également émis sur le canal de recherche PCH de façon plus sélective, après détection de ses fréquences. Le code d'appel est modifié par ce bruit électromagnétique, le déclanchement de la sonnerie ne s'effectue pas.

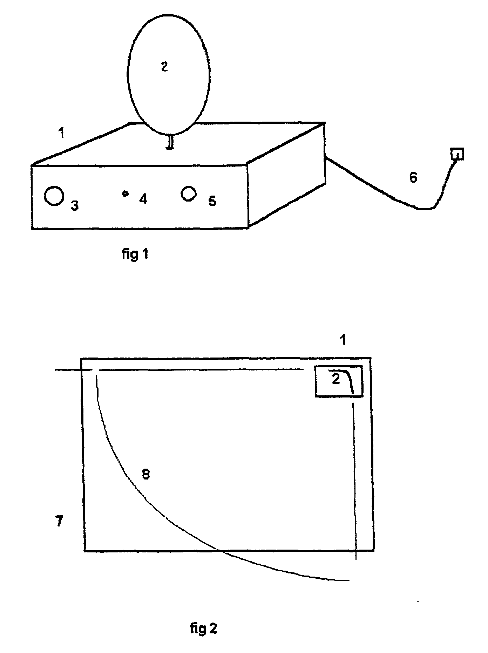

Les figures 1 et 2 montrent un boitier de brouillage simple (1) avec une antenne directionnelle (2) permettant d'émettre et/ou de recevoir suivant un angle déterminé en volume.
L'angle de couverture est réglé physiquement par orientation par rapport au volume à protéger (7).La puissance est réglée par un potentiomètre (3) ou automatiquement en fonction du niveau reçu.
La puissance (8) est réglée en fonction du volume et de la nature des cloisons.

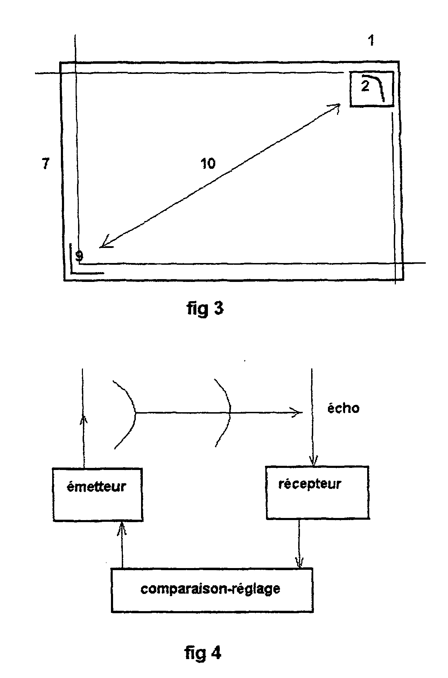

La figure 3 montre la couverture et la régulation obtenue par un boitier brouilleur (2) qui contient en plus un récepteur, qui, entre autres, reçoit l'écho de ses propres signaux de brouillage.
La figure 4 montre le principe de comparaison électronique de l'émission par comparaison avec l'écho obtenu par un réflecteur passif (9), situé à l'opposé du volume (7).
La puissance de l'écho sera comparée à celle des communications reçues pour permettre au brouilleur de régler sa puissance.
L'angle et la puissance peuvent donc être réglée et maintenus en permanence par comparaison permanente entre les signaux émis et reçus.
Cette amélioration est envisageable pour obtenir une couverture juste nécessaire sans brouiller l'extérieur du volume à protéger.

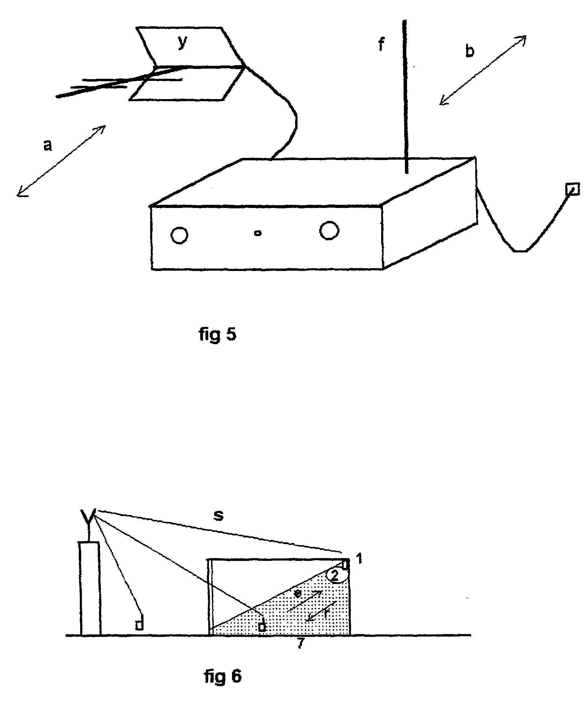

La figure 5 montre la configuration d'un brouilleur avec une antenne directive permettant de détecter les mobiles à neutraliser et une antenne non directive pour recevoir ou émettre avec les stations de base.La détection des mobiles qui vont devenir actifs permet de limiter les émissions dans le temps. Le brouilleur peut intervenir au début du processus de communication pendant la phase où les échanges de données ne sont pas encore chiffrées ( cryptées).
Son intervention sur les canaux de signalisation est facilitée par l'absence de sauts en fréquence.
La figure 6 montre la couverture en détection (e) et en réponse (r) de façon à localiser au maximum dans le temps et dans l'espace l'émission de signaux, par l'appareil objet de l'invention.

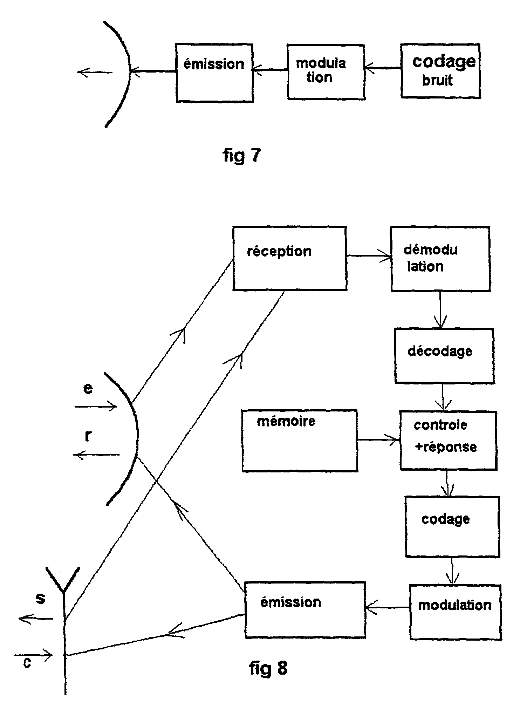

La figure 7 montre le schéma des fonctions de l'appareil dans le cas le plus simple du brouillage permanent.
Selon une autre caractéristique, le matériel objet de l'invention, tout en utilisant les mêmes moyens de limitation du volume à protéger que précédemment, possède une antenne directionnelle réceptrice et émettrice qui capte de façon permanente et localisée en angle les signaux émis par les radiotéléphones présents dans cet angle et émet de façon localisée dans le même angle un code de neutralisation.
Une amélioration de ce matériel consiste à stocker les types de codes auquel il doit répondre sélectivement ( en émission et en réception) par comparaison avec des données chargées dans sa mémoire ou émises par les stations.
Une variante consiste à localiser l'opération à un passage géographique déterminé (porte,entrée,...).
Une intégration plus complète est possible avec le réseau global et les opérateurs en établissant une communication directe entre le brouilleur et le ou les stations de base en signalant par radio les opérations de neutralisation.
La figure 8 montre le schéma des fonctions remplies par l'appareil dans cette version.
Dans une forme très complète de l'appareil, le présent brouilleur peut constituer un véritable central radiotéléphonique local et sélectif, avec plus ou moins d'intégration avec le système global extérieur.

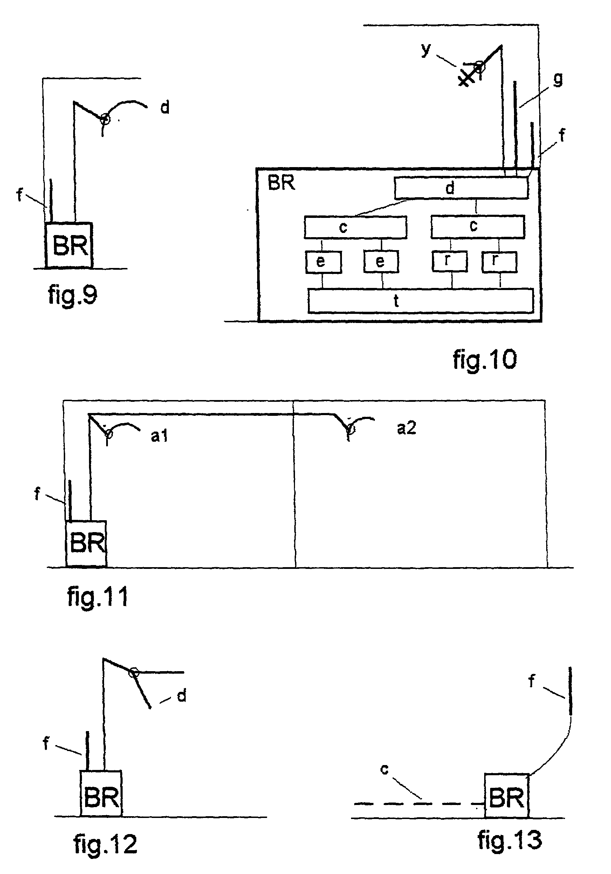

Les figures 9 à 16 représentent certaines variantes des formes élaborées de l'appareil, objet de l'invention.
Le problème principal est d'éviter au maximum les pollutions radioélectriques à l'extérieur de l'espace (ouvert ou fermé) à protéger ou d'améliorer la sélectivité de la détection.
Ce problème est résolu par les combinaisons suivantes:
1- limitations dans l'espace par:
   - directivité du brouillage émis
   - choix d'un angle d'émission proche de la verticale et d'un angle de phase différent
   - distance minimum entre le brouilleur et le mobile pour utiliser une puissance minimum avec une décroissance en 1/d2 rapide ( câbles rayonnants ou capteurs répartis).
   - auto-régulation de la puissance du brouillage
2- limitations dans le temps par:
   - émission de signaux seulement en cas de détection d'un mobile qui émet dans le volume avant de sonner ou avant de communiquer ( AB sur RACH par exemple).
3- limitations dans les informations de brouillage:
   - signaux de brouillage minimum et peu "nocifs" en évitant les émissions sur les canaux de trafic et de communication.
   - sélectivité liée au type d'abonnement ou au type d'utilisation ( par exemple, le 112, appel d'urgence en France, doit passer).
   - par un dialogue de synchronisation avec les stations et leurs logiciels Le risque de pollution devient nul si le brouilleur n'émet que vers la station de base un signal codifié.
Les limitations dans le temps sont obtenues en émettant seulement lorsqu'un mobile du volume va rentrer en communication, en appel entrant ou sortant.

### Exemples de configurations et de fonctionnements:

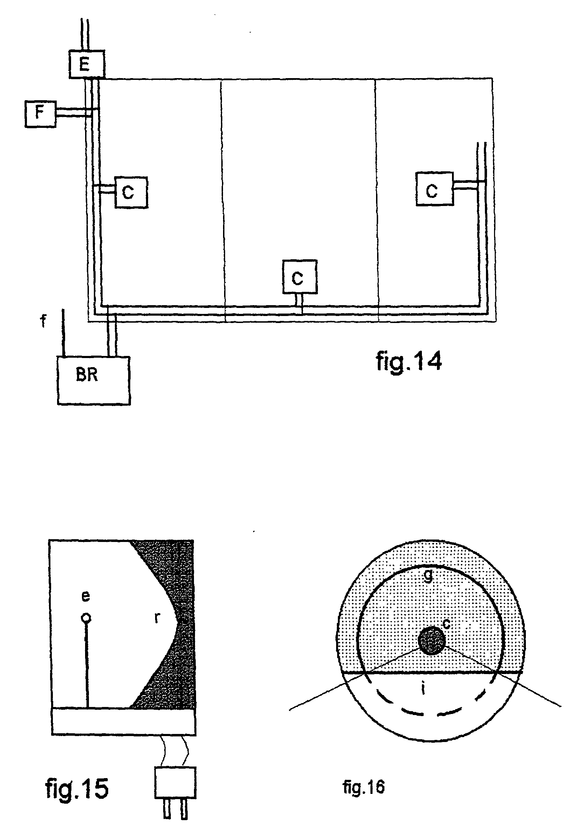

- 1 APPAREIL brouilleur (BR), émetteur-récepteur comprenant:
   - 1 antenne directive réglable de types parabole (d sur fig.9), yaki (y sur fig.10), dièdre (d sur fig.12), câble rayonnant (c,fig.13),panneaux,antennes sectorisées.... La proximité est obtenue par la répartition de plusieurs antennes ( fig.11, fig.14) et l'utilisation de:
      . câble rayonnant ( fig.16) construit à partir de câble coaxial avec interruption périodique partielle du conducteur extérieur ( quelques cm tous les 2 m par exemple).
      . boitiers (fig.15) comprenant un élément rayonnant (e) et une surface concave réfléchissante (r), répartis (fig.14) dans le volume à protéger et connectés au brouilleur (BR).
      La connection peut, en variante, utiliser les câbles électriques existants ,avec des fréquences éventuellement différentes et la pose de filtre (F) pour l'isolation avec l'extérieur.
      Ces antennes directives et/ou proches permettent de détecter les mobiles concernés et d'émettre de façon localisée.
   - 1 antenne "fouet" de modèles classiques ( f sur fig.9,10,11,12,13,14).
      Cette antenne, non directive horizontalement, permet de recevoir la ou les stations, de réguler la puissance du brouilleur, d'émettre vers la station et d'assurer un rôle de relais avec celle-ci.
      Des variantes avec plus de 2 antennes (y,g,f) ( pour séparer les fonctions d'émission et de réception ou pour s'adapter aux différents réseaux, par exemples) sont possibles (fig.10) Ceci ne change pas les principes de l'invention.
   - exemples de fonctionnements sur les signaux:
      . détection d'un mobile avec appel entrant par détection d'un AB sur RACH ( signal de présence du mobile sur le canal d'accès vers la station).
      . brouillage du mobile par émission de 1 ou plusieurs bits de brouillage sur PCH ( canal d'appel des mobiles par la station)
      . réponse du brouilleur vers la station (signal à définir avec les opérateurs), pour le filtrage total ou sélectif.(dialogue propre avec les stations).
      . détection d'un appel sortant (émis par le mobile): CR sur RACH ( demande de canal par le mobile sur le canal d'accès vers la station)
      . brouillage des mobiles par émission d'un " faux " BCCH local et sans connexion ( BCCH: canal fixe d'identification émis par les stations )
      . etc ...
      . filtrage par fonctionnement du brouilleur comme ré-émetteur ou sous-station.
      Les choix des solutions retenues devront être réalisés avec les opérateurs de radiotéléphonie afin d'éliminer au maximum les interventions indésirables pour le réseau global.
- ADAPTATIONS des mobiles et des locaux:
   ( voir brevet FR 9708546 du 1/7/1997)
   - pour les liaisons urgentes ou privilégiés ( médecins,...), un minimum de service sera assuré même en cas de détection d'un signal de brouillage.
   - adaptation pour la détection à des passages géographiques d'entrée/sortie d'un local.
   - création de cabines ou connexions non brouillées.
- LIAISONS avec les stations:
   - adaptations des logiciels des stations pour gérer les filtrages sélectifs en liaison avec les brouilleurs, avec différentes classes d'abonnements prioritaires.
   - le brouilleur est identifié par les réseaux et devient un composant avec éventuellement un abonnement et des facturations de trafic.

## Revendications

1. Appareil permettant de neutraliser partiellement ou totalement dans un espace prédéterminé les capacités d'émission et de réception de radiotéléphones ou de récepteurs de radiomessagerie caractérisé en ce qu'il comprend au moins un émetteur adapté à émettre des signaux de mêmes fréquences que les fréquences utilisées pour les communications entre lesdits radiotéléphones ou lesdits récepteurs de radiomessagerie et les stations de base avec lesquelles ils peuvent communiquer, cet émetteur comprenant des moyens permettant de modifier les informations contenues dans les signaux émis ou reçus par lesdits radiotéléphones ou lesdits récepteurs de radiomessagerie ou par les stations de base.

2. Appareil suivant la revendication 1 caractérisé en ce qu'il comprend, en plus, un récepteur pour détecter les radiotéléphones présents dans la zône à protéger et adapter la nature ou la puissance des signaux émis par l'appareil.

3. Appareil suivant les revendications 1 ou 2
caractérisé en ce qu'il comprend, en plus, un récepteur pour les liaisons radio avec les stations de base.

4. Appareil suivant l'une des revendications 1 à 3
caractérisé en ce qu'il comprend un émetteur pour les liaisons radio avec les stations de base.

5. Appareil suivant l'une des revendications 1 à 4
caractérisé en ce qu'il utilise une ou plusieurs antennes sélectives pour l'émission localisée vers les radiotéléphones ou la détection de ces radiotéléphones locaux.

6. Appareil suivant la revendication 5 caractérisé en ce
que les antennes sélectives sont réparties dans l'espace à protéger en fonction de sa géométrie.

7. Appareil suivant la revendication 5 caractérisé
en ce que les antennes sélectives sont directives en angle.

8. Appareil suivant la revendication 5 caractérisé
en ce que l'antenne sélective répartie est de type câblé rayonnant.

9. Appareil suivant l'une quelconque des revendications 1 à 8
caractérisé en ce que les composants des émetteurs et récepteurs ainsi que les antennes sont multistandards ou multiples pour les gammes de fréquence ou les standards radiotéléphoniques à filtrer.

10. Appareil suivant la revendication 6 CARACTERISE en ce que la liaison avec les antennes réparties utilise le
réseau électrique existant.

11. Appareil suivant l'une quelconque des revendications 1 à 9 caractérisé en ce qu'il utilise des antennes sélectives pour détecter et/ou neutraliser ou réactiver les radiotéléphones à des endroits de passages précis.

12. Appareil suivant l'une quelconques des revendications 1 à 11 caractérisé en ce qu'il émet un signal de brouillage permanent à destination des radiotéléphones.

13. Appareil suivant l'une quelconque des revendications 2 à 11 caractérisé en ce qu'il détecte les émissions des radiotéléphones présents et leur envoie un signal de brouillage intermittent avant qu'ils ne sonnent ou appellent.

14. Appareil suivant l'une quelconque des revendications 3 et 13 caractérisé en ce qu'il reçoit las signaux des stations et règle la puissance et la nature des signaux, avec modification des informations ou des codes de service réémis à destination des radiotéléphones.

15. Appareil suivant les revendications 4 et 13 caractérisé en ce qu'il émet de façon intermittente vers les radiotéléphones actifs et émet un signal codifié vers les stations de base pour les prévenir du brouillage.

16. Appareil suivant les revendications 3 et 13 caractérisé en ce qu'il reçoit un code de la station avant de brouiller le radiotéléphone.

17. Appareil suivant l'une quelconque des revendications 2 à 11 caractérisé en ce qu'il détecte un radiotéléphone local et qu'il émet vers la station un code de demande de
filtrage par la station, sans émettre vers le mobile.

18. Appareil suivant la revendication 17 caractérisé en ce qu'il émet également un code de filtrage à destination du mobile.

19. Appareil suivant l'une quelconque des revendications 1 à 18 caractérisé en ce qu'il n'émet des signaux radio que sur les canaux de signalisation.

20. Appareil suivant l'une quelconque des revendications précédentes caractérisé en ce qu'il est identifié par les réseaux de radiotéléphonie grâce à des codes d'identification dans sa mémoire.

21. Appareil suivant l'ensemble des revendications 1 à 4
caractérisé en ce qu'il sert de relais à la station, y compris pour les canaux de communication.

22. Appareil suivant l'une des revendications précédentes comprenant un seul récepteur pour détecter les radiotéléphones présents ou actifs caractérisé en ce qu'il utilise des moyens ou antennes de détection sélectifs, soit en angle, soit répartis, soit par câble rayonnant, soit par proximité, soit par portique.

## Patentansprüche

1. Gerät, das in einem vorbestimmten Raum die Sende- und Empfangsmöglichkeit von Funkfemsprechgeräten oder von Funkspruchempfängern teilweise oder vollständig neutralisieren kann, dadurch gekennzeichnet, dass es mindestens einen Sender umfasst, der so eingestellt ist, dass er Signale gleicher Frequenz aussendet, wie die für die Mitteilungen zwischen den Funkfernsprechgeräten oder den Funkspruchempfängern und den Basisstationen, mit denen sie kommunizieren können, verwendeten Frequenzen, wobei dieser Sender Mittel umfasst, die es ermöglichen, die Informationen zu modifizieren, die in den von den Funksprechtelephonen oder den Funkspruchempfängern oder den Basisstationen ausgesandten oder empfangenen Signalen enthalten sind.

2. Gerät nach Anspruch 1, dadurch gekennzeichnet, dass es ausserdem einen Empfänger umfasst, um die in dem zu schützenden Bereich vorhandenen Funkfemsprechgeräte ausfindig zu machen und die Art oder die Stärke der von dem Gerät ausgesandten Signale einzustellen.

3. Gerät nach den Ansprüchen 1 oder 2, dadurch gekennzeichnet, dass es ausserdem einen Empfänger für die Funkverbindungen mit den Basisstationen umfasst.

4. Geräte nach einem der Ansprüche 1 bis 3, dadurch gekennzeichnet, dass es einen Sender für die Funkverbindungen mit den Basisstationen umfasst.

5. Gerät nach einem der Ansprüche 1 bis 4, dadurch gekennzeichnet, dass es eine oder mehrere selektive Antennen zur auf die Funkfemsprechgeräte hin gerichteten Aussendung oder zur Detektion dieser lokalen Funkfernsprechgeräte benutzt.

6. Gerät nach Anspruch 5, dadurch gekennzeichnet, dass die selektiven Antennen in dem zu schützenden Raum abhängig von seiner Geometrie verteilt sind.

7. Gerät nach Anspruch 5, dadurch gekennzeichnet, dass die selektiven Antennen Winkel-Richtwirkung haben.

8. Gerät nach Anspruch 5, dadurch gekennzeichnet, dass die verteilt installierte selektive Antenne vom Typ strahlendes Kabel ist.

9. Gerät nach einem beliebigen der Ansprüche 1 bis 8, dadurch gekennzeichnet, dass die Komponenten der Sender und Empfänger ebenso wie die Antennen Mehrnormenteile oder mehrfach vorhanden sind für die zu filternden Frequenzbereiche oder Funkfernsprech-Standards.

10. Gerät nach Anspruch 6, dadurch gekennzeichnet, dass die Verbindung mit den verteilt installierten Antennen das vorhandene Stromnetz benutzt.

11. Gerät nach einem beliebigen der Ansprüche 1 bis 9, dadurch gekennzeichnet, dass es selektive Antennen benutzt, um die Funkfernsprechgeräte an genau bestimmten Durchgangsstellen zu detektieren und/oder zu neutralisieren oder zu reaktivieren.

12. Gerät nach einem beliebigen der Ansprüche 1 bis 11, dadurch gekennzeichnet, dass es ein andauerndes Störsignal mit Zielrichtung auf die Funkfernsprechgeräte aussendet.

13. Gerät nach einem beliebigen der Ansprüch 2 bis 11, dadurch gekennzeichnet, dass es die Emissionen vorhandener Funkfernsprechgeräte detektiert und ihnen ein intermittierendes Störsignal schickt, bevor diese klingeln oder rufen.

14. Gerät nach einem beliebigen der Ansprüche 3 und 13, dadurch gekennzeichnet, dass es die Signale der Stationen empfängt und die Stärke und die Art der Signale reguliert, unter Modifizierung der Informationen oder der Servicecodes, die mit Zielrichtung auf die Funkfernsprechgeräte wiederausgestrahlt werden.

15. Gerät nach den Ansprüchen 4 und 13, dadurch gekennzeichnet, dass es intermittierend auf die aktiven Funkfernsprechgeräte hin sendet und ein Signal mit festgelegtem Code zu den Basisstationen hin sendet, um sie von der Störung in Kenntnis zu setzen.

16. Gerät nach den Ansprüchen 3 und 13, dadurch gekennzeichnet, dass es einen Code von der Station empfängt, bevor es das Funkfernsprechgerät stört.

17. Gerät nach einem beliebigen der Ansprüche 2 bis 11, dadurch gekennzeichnet, dass es ein lokales Funkfernsprechgerät detektiert und dass es zur Station hin einen Code zur Anforderung von Ausfiltern sendet, ohne zum Mobiltelefon hin zu senden.

18. Gerät nach Anspruch 17, dadurch gekennzeichnet, dass es ebenfalls einen Ausfilterungscode mit Zielrichtung auf das Mobiltelefon sendet.

19. Gerät nach einem beliebigen der Ansprüche 1 bis 18, dadurch gekennzeichnet, dass es Funksignale nur auf den Kanälen der Nachrichtenübermittlung sendet.

20. Gerät nach einem beliebigen der vorhergehenden Ansprüche, dadurch gekennzeichnet, dass es von den Netzen des Funkfernsprechwesens aufgrund von Identifizierungscodes in seinem Speicher identifiziert wird.

21. Gerät nach der Gesamtheit der Ansprüche 1 bis 4, dadurch gekennzeichnet, dass es der Station einschliesslich der Kommunikationskanäle als Relaisstation dient.

22. Gerät nach einem der vorhergehenden Ansprüche, das einen einzigen Empfänger zur Detektion der vorhandenen oder aktiven Funkfernsprechgeräte umfasst, dadurch gekennzeichnet, dass es selektive Mittel oder Detektionsantennen verwendet, sei es winklig, sei es verteilt, sei es durch strahlendes Kabel, sei es durch Nahwirkung, sei es durch Portalrahmen.

## Claims

1. Apparatus making it possible to partially or completely neutralize in a predetermined space the transmission and reception capabilities of radio telephones or of radio messaging receivers, characterized in that it comprises at least one transmitter adapted for transmitting signals of the same frequencies as the frequencies used for the communications between the said radio telephones or the said radio messaging receivers and the base stations with which they can communicate, this transmitter comprising means making it possible to modify the information contained in the signals transmitted or received by the said radio telephones or the said radio messaging receivers or by the base stations.

2. Apparatus according to Claim 1, characterized in that it comprises, in addition, a receiver for detecting radio telephones present in the zone to be protected and for adapting the nature or the power of the signals transmitted by the apparatus.

3. Apparatus according to Claims 1 or 2, characterized in that it comprises, in addition, a receiver for the radio links with the base stations.

4. Apparatus according to one of the Claims 1 to 3, characterized in that it comprises a transmitter for the radio links with the base stations.

5. Apparatus according to one of Claims 1 to 4, characterized in that it uses one or more selective antennas for localized transmission to radio telephones or for detection of these local radio telephones.

6. Apparatus according to Claim 5, characterized in that the selective antennas are distributed in the space to be protected as a function of its geometry.

7. Apparatus according to Claim 5, characterized in that the selective antennas are directional in terms of angle.

8. Apparatus according to Claim 5, characterized in that the distributed selective antenna is of the radiating cable type.

9. Apparatus according to any one of Claims 1 to 8, characterized in that the components of the transmitters and receivers as well as the antennas are multistandard or multiple for the frequency ranges or the radio telephone standards to be filtered.

10. Apparatus according to Claim 6, characterized in that the link with the distributed antennas uses the existing electrical network.

11. Apparatus according to any one of Claims 1 to 9, characterized in that it uses selective antennas to detect and/or neutralize or reactivate the radio telephones at specific sites of passage.

12. Apparatus according to any one of Claims 1 to 11, characterized in that it transmits a continuous jamming signal destined for the radio telephones.

13. Apparatus according to any one of Claims 2 to 11, characterized in that it detects the transmissions of the radio telephones present and sends them an intermittent jamming signal before they ring or call.

14. Apparatus according to any one of Claims 3 and 13, characterized in that it receives the signals from the stations and adjusts the power and the nature of the signals, with modification of the information or of the service codes retransmitted destined for the radio telephones.

15. Apparatus according to Claims 4 and 13, characterized in that it transmits intermittently towards the active radio telephones and transmits a coded signal to the base stations so as to forewarn them of the jamming.

16. Apparatus according to Claims 3 and 13, characterized in that it receives a code from the station before jamming the radio telephone.

17. Apparatus according to any one of Claims 2 to 11, characterized in that it detects an active local radio telephone and that it transmits to the station a code requesting filtering by the station, without transmitting to the mobile.

18. Apparatus according to Claim 17, characterized in that it also transmits a filtering code destined for the mobile.

19. Apparatus according to any one of Claims 1 to 18, characterized in that it transmits radio signals only on the signalling channels.

20. Apparatus according to any one of the preceding claims, characterized in that it is identified by the radio telephony networks by virtue of the identification codes in its memory.

21. Apparatus according to all of Claims 1 to 4, characterized in that it serves the station as a relay, including in respect of the communication channels.

22. Apparatus according to one of the preceding claims, comprising a single receiver for detecting the radio telephones which are present or active, characterized in that it uses detection means or antennas which are selective, either in terms of angle, or are distributed, either via a radiating cable, or by proximity, or via a gateway.
